# EUROPÄISCHE PATENTANMELDUNG

(11) **EP 0 739 777 A2**
(43) Veröffentlichungstag der Anmeldung: **30.10.1996**
(21) Anmeldenummer: 96105307.1
(22) Anmeldetag: 03.04.1996
(51) Int. Cl.: B60R 16/02

(54) **Verfahren und Vorrichtung zur Ansteuerung einer Fahrzeugzusatzeinrichtung, insbesondere eines Fahrzeugzusatzheizgerätes, mittels unidirektionaler Funkfernsteuerung**

(30) Priorität: 26.04.1995 DE 19515355
(71) Anmelder: Firma J. Eberspächer, 73730 Esslingen (DE)
(72) Erfinder: Hirt, Andreas, 73207 Plochingen (DE); Jonsson, Ulf, 15252 Södertälje (SE)

(57) **Zusammenfassung**

Es wird vorgeschlagen, bei einem Verfahren und einer Vorrichtung zur Ansteuerung einer Zusatzeinrichtung eines Fahrzeugs (6) das öffentliche Telefonnetz (2) mit örtlichem Funkrufnetz (3) zu benutzen, wobei eine unidirektionale numerische Nachricht auf einen der Steuereinrichtung (13) der Fahrzeugzusatzeinrichtung zugeordneten Mobilfunkempfänger (7) drahtlos übertragen und diese numerische Nachricht als Codewort zum Aktivieren oder Deaktivieren des Zusatzeinrichtung im Fahrzeug (6) verwendet wird.

## Beschreibung

Die Erfindung betrifft ein Verfahren und eine Vorrichtung zur Ansteuerung der Steuereinrichtung einer Fahrzeugzusatzeinrichtung, insbesondere einer Fahrzeugzusatzheizung, mittels unidirektionaler Funkfernsteuerung.

Aus DE-OS 42 15 221 oder dem Prospekt "TP3" der Firma J. Eberspächer sind Funkfernsteuerungen von Heizgeräten für Fahrzeuge der vorgenannten Art bekannt. Diese haben den Vorteil, daß ein Ein- und Ausschalten des Heizgerätes eines Fahrzeugs aus einer Entfernung bis ca. 1 km möglich ist.

Aufgabe der Erfindung ist die Schaffung einer Vereinfachung der Funkfernsteuerung, wobei der Aktivierungsbereich einer Fahrzeugzusatzeinrichtung bei Betätigung der Funkfernsteuerung nicht auf eine Entfernung bis ca. 1 km begrenzt, sondern nahezu unbegrenzt ist.

Gelöst wird die der Erfindung zugrundeliegende Aufgabe durch ein Verfahren der im Patentanspruch 1 angegebenen Art, vorteilhaft weitergebildet nach den Patentansprüchen 2 bis 4.

Eine erfindungsgemäße Funkfernbedienung zeichnet sich nach den Merkmalen der Patentansprüche 5 bis 10 aus.

Wesen der Erfindung ist, daß bei der unidirektionalen Funkfernsteuerung das öffentliche Telefonnetz mit örtlichem Funkrufnetz verwendet wird, wobei eine unidirektionale numerische Nachricht auf einen der Steuereinrichtung der Fahrzeugzusatzeinrichtung zugeordneten Mobilfunkträger drahtlos übertragen und diese numerische Nachricht als Codewort zum Aktivieren der Zusatzeinrichtung im Fahrzeug verwendet wird.

Beispielsweise durch den Funkrufdienst SCALL der DeTeMobil ist es möglich, über ein ganz normales Telefon einen Funkruf zu senden und damit die Fahrzeugzusatzeinrichtung zu aktivieren. Das dabei zur Funkübertragung genutzte örtliche Funkrufnetz ("Cityruf") gewährleistet einen nahezu flächendeckenden Empfang der Nachricht. SCALL bietet die Möglichkeit, eine numerische Nachricht zu übertragen. Diese Nachricht besteht aus bis zu 15 Ziffern. Erfindungsgemäß wird also diese numerische Nachricht als Codewort zum Aktivieren des Zusatzgerätes verwendet.

Es wird dem Benutzer des Systems die Sicherheit gegeben, daß allein die Kenntnis der eingeprägten Empfängernummer noch nicht zum Einschalten des Zusatzgerätes ausreicht. Die Auswertung der numerischen Nachricht kann entweder durch eine Decodierschaltung im Mobilfunkempfänger oder softwaremäßig durch Programmteile im bestehenden Mikroprozessor des Bedienteils realisiert werden. Die Möglichkeit, das Codewort zu verändern, bleibt dem Benutzer gegeben. Dabei ist das Codewort entweder am Empfänger durch entsprechende Schalter oder über die Eingabetasten des Bedienteils veränderbar.

Folgende Kombinationen sind denkbar:
1. Separater Mobilfunkempfänger mit Decoder:
   Der Mobilfunkempfänger ist als eigenständige Einheit im Fahrzeug vorhanden. Dieser ist in einem eigenen Gehäuse mit entsprechender Schutzbeschaltung eingebaut.
   Ist die Decodierschaltung im Mobilfunkempfänger integriert, so gibt dieser nur die Ergebnislogik an das Bedienteil der Fahrzeugzusatzeinrichtung weiter.
2. Separater Mobilfunkempfänger ohne Decoder:
   Der Mobilfunkempfänger ist als eigenständige Einheit im Fahrzeug vorhanden. Dieser ist in einem eigenen Gehäuse mit entsprechender Schutzbeschaltung eingebaut.
   Ist die Decodierlogik Teil des Mikroprozessorprogramms des Bedienteils, so gibt der Mobilfunkempfänger die numerische Nachricht zur Auswertung an das Bedienteil weiter.
3. Integrierter/angeflanschter Mobilfunkempfänger im/am Bedienteil:
   Der Mobilfunkempfänger ist Teil des Bedientelements. Ist er am Gehäuse des Bedienteils angeflanscht, so hat er ein eigenes Gehäuse. Die Stromversorgung/Schutzbeschaltung wird durch das bestehende Bedienteil ermöglicht. Der Mobilfunkempfänger wandelt hierbei nur die HF-Funksignale in NF-Signale um. Die Signalauswertung wird ganz oder teilweise durch den Mikroprozessor des Bedienteils realisiert.
   Eine weitere Möglichkeit besteht darin, daß der Mobilfunkempfänger einen eigenständigen Mikroprozessor für die Signalauswertung beinhaltet. Dadurch ist bei Applikationen das Ergebnissignal universeller verwendbar.

Der Schutzbereich der Erfindung betrifft also nicht nur eine Ansteuerung eines Fahrzeugzusatzheizgerätes, sondern generell jedwede Art der entfernungsunabhängigen Betätigung von Fahrzeugzusatzeinrichtungen, wie Zentralverriegelung, Fahrzeuggebläse, Fensterheber, Schiebehebedach, Katalysatorvorwärmung und dergleichen.

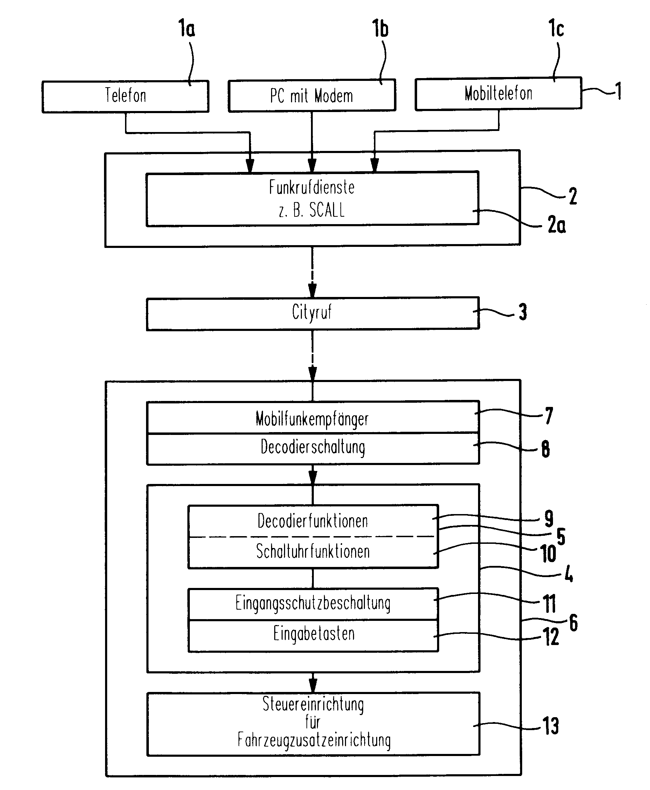

Die Erfindung wird nachfolgend anhand eines Ausführungsbeispiels unter Bezugnahme auf die beigefügte Zeichnung näher erläutert, deren einzige Figur ein Blockschaltbild einer entfernungsunabhängigen Ansteuerung einer Fahrzeugzusatzeinrichtung unter Nutzung von bestehenden Mobilfunknetzen zeigt.

Durch den Funkrufdienst SCALL 2a ist es möglich, über ein ganz normales Telefon 1a, einen PC mit Modem 1b oder ein Mobiltelefon 1c als Eingabemedium 1 einen Funkruf über das öffentliche Telefonnetz 2 zu senden und dabei eine Zusatzeinrichtung eines Fahrzeugs 6 zu aktivieren.

Hierbei gewährleistet das zur Funkübertragung genutzte Funkrufnetz 3 ("Cityruf") einen nahezu flächendeckenden Empfang der Nachricht.

Per Telefon 1a oder dergl. kann mithin drahtlos einem Mobilfunkempfänger 7 eines Fahrzeugs 6 eine Nachricht, insbesondere eine numerische Nachricht bestehend aus bis zu 15 Ziffern übermittelt werden. Diese numerische Nachricht wird als Codewort zum Aktivieren des Heizgerätes oder dergl. verwendet.

Das Codewort kann der Benutzer des Mobilfunkempfängers 7 im Bedienteil 4 der Fahrzeugzusatzheizung durch entsprechende Schalter oder über die Eingabetasten des Bedienteils einstellen bzw. verändern.

Im speziellen Ausführungsbeispiel ist der Mobilfunkempfänger 7 mit Decoder als eigenständige Einheit im Fahrzeug vorhanden, wobei der Decoder eine Decodierschaltung 8 besitzt. Der Mobilfunkempfänger einschließlich Decoder ist in einem eigenen Gehäuse mit entsprechender Schutzbeschaltung vorgesehen.

Bei empfangener numerischer Nachricht wird das Codewort in der Decodierschaltung 8 decodiert, wobei die Ergebnislogik an das Bedienteil 4 des Fahrzeugzusatzheizgerätes oder dergl. weitergegeben wird, wobei der Mikroprozessor 5 des Bedienteils 4 bekannte Decodierfunktionen 9 und Schaltuhrfunktionen 10 ausübt.

Das Bedienteil 4 mit den Eingabetasten 12 und gegebenenfalls einem Anzeigedisplay besitzt eine eigene Eingangsschutzbeschaltung 11 und steuert letztlich die Steuereinrichtung 13 der Fahrzeugzusatzeinrichtung unidirektional an, um diese zu aktivieren oder deaktivieren.

Es sei noch angemerkt, daß in den Unteransprüchen enthaltene selbständig schutzfähige Merkmale trotz der vorgenommenen formalen Rückbeziehung auf den Hauptanspruch entsprechenden eigenständigen Schutz haben sollen. Im übrigen fallen sämtliche in den gesamten Anmeldungsunterlagen enthaltenen erfinderischen Merkmale in den Schutzumfang der Erfindung.

## Patentansprüche

1. Verfahren zur Ansteuerung einer Steuereinrichtung (13) für eine Fahrzeugzusatzeinrichtung, insbesondere eine Fahrzeugzusatzheizung, mittels unidirektionaler Funkfernsteuerung,
dadurch gekennzeichnet,
daß bei der unidirektionalen Funkfernsteuerung das öffentliche Telefonnetz (2) mit örtlichem Funkrufnetz (3) verwendet wird, wobei eine unidirektionale numerische Nachricht auf einen der Steuereinrichtung (13) zugeordneten Mobilfunkempfänger (7) drahtlos übertragen und diese numerische Nachricht als Codewort zum Aktivieren der Zusatzeinrichtung im Fahrzeug (6) verwendet wird.

2. Verfahren nach Anspruch 1,
dadurch gekennzeichnet,
daß die Auswertung der numerischen Nachricht durch eine Decodierschaltung (8) im Mobilfunkempfänger (7) erfolgt.

3. Verfahren nach Anspruch 1,
dadurch gekennzeichnet,
daß die Auswertung der numerischen Nachricht softwaremäßig durch Programmteile im Mikroprozessor (5) des Bedienteils (4) der Fahrzeugzusatzeinrichtung erfolgt.

4. Verfahren nach einem der Ansprüche 1 bis 3,
dadurch gekennzeichnet,
daß die numerische Nachricht bzw. das Codewort zum Aktivieren der Zusatzeinrichtung durch den Benutzer des Bedienteils (4) eingestellt werden kann bzw. veränderbar ist.

5. Funkfernbedienung für eine Fahrzeugzusatzeinrichtung, insbesondere eines Fahrzeugzusatzheizgeräts, mit Steuereinrichtung unter Verwendung des Ansteuerungsverfahrens nach einem der Ansprüche 1 bis 4,
dadurch gekennzeichnet,
daß der Steuereinrichtung (13) der Fahrzeugzusatzeinrichtung ein unidirektionaler Mobilfunkempfänger (7) vorgeschaltet ist.

6. Funkfernbedienung nach Anspruch 5,
dadurch gekennzeichnet,
daß der Mobilfunkempfänger (7) mit Decoder in einem eigenen Gehäuse als eigenständige Einheit im Fahrzeug (6) angeordnet ist.

7. Funkfernbedienung nach Anspruch 5,
dadurch gekennzeichnet,
daß der Mobilfunkempfänger (7) ohne Decoder in einem eigenen Gehäuse im Fahrzeug (6) angeordnet ist und die Decodierlogik Teil des nachgeschalteten Mikroprozessors (5) ist.

8. Funkfernbedienung nach Anspruch 5,
dadurch gekennzeichnet,
daß der Mobilfunkempfänger (7) integrierter oder angeflanschter Teil des Bedienteils (4) der Fahrzeugzusatzeinrichtung ist.

9. Funkfernbedienung nach einem der Ansprüche 5 bis 8,
dadurch gekennzeichnet,
daß eine Schutzbeschaltung vorgesehen ist.

10. Funkfernbedienung nach einem der Ansprüche 5 bis 9,
dadurch gekennzeichnet,
daß der Mobilfunkempfänger (7) einen eigenständigen Mikroprozessor für die Signalauswertung aufweist.
